# EUROPÄISCHE PATENTSCHRIFT

(11) **EP 3 167 749 B1**
(45) Veröffentlichungstag und Bekanntmachung des Hinweises auf die Patenterteilung: **15.08.2018**
(21) Anmeldenummer: 16193145.6
(22) Anmeldetag: 05.09.2011
(51) Int. Cl.: A46B 9/02, A46B 5/02, A01M 21/02

(54) **FUGEN-REINIGUNGSVORRICHTUNG**
JOINT GAP CLEANING DEVICE
DISPOSITIF DE NETTOYAGE DE JOINTS

(30) Priorität: 10.09.2010 DE 202010008507 U
(43) Veröffentlichungstag der Anmeldung: 17.05.2017
(62) Teilanmeldung aus: 11180018.1
(73) Patentinhaber: Waldenburger, André, 82054 Sauerlach-Arget (DE)
(72) Erfinder: Waldenburger, André, 82054 Sauerlach-Arget (DE)
(74) Vertreter: Beckord & Niedlich Patentanwälte PartG mbB

(56) Entgegenhaltungen:
- CA-A- 1 125 708
- DE-A1- 19 722 285
- GB-A- 255 586
- JP-A- 2002 360 340
- US-A- 3 761 990
- US-A- 5 809 604
- US-A- 6 073 298

## Beschreibung

Die Erfindung bezieht sich auf eine Fugen-Reinigungsvorrichtung.

Für die Reinigung von Fugen gibt es praktisch keine vernünftigen Vorrichtungen, so dass man auf nur wenig geeignete Vorrichtungen wie Topf-Reinigungsschwämme und dergleichen zurückgreifen muss.

JP 2002 360340 A offenbart ein Fugen-Reinigungsvorrichtung, die einen Haltegriff und wenigstens eine schmale Bürstenleiste mit Bürsten aufweist, wobei die Breite der Bürsten senkrecht zur Längsrichtung der Bürstenleiste kleiner oder gleich der Breite der zu bearbeitenden Fugen ist, und die Bürstenleiste eine lange untere Bürstenleiste an einer unteren Längskante der Vorrichtung und eine zusätzlich in einem Winkel von etwa 45° zu der unteren Bürstenleiste angeordnete Bürstenleiste umfasst. Aufgabe der Erfindung ist es, eine Fugen-Reinigungsvorrichtung zu schaffen, welche eine bequeme und gute Reinigung von Fugen aller Art ermöglicht. Die Erfindung ist anwendbar auf mineralische und dauerelastische Fugen im Innen- und Außenbereich, beispielsweise auf Fugen in einer verfliesten Fläche oder zwischen Terrassenplatten. Solche Fugen haben in der Regel eine Breite von wenigen Millimetern, z.B. ein bis acht Millimeter, spezieller etwa zwei bis sechs Millimeter und noch spezieller etwa vier bis sechs Millimeter. Die Erfindung ist auf keine bestimmte Fugenbreite begrenzt.

Die Aufgabe wird erfindungsgemäß durch die Merkmale des Anspruches 1 gelöst. Weitere Ausgestaltungen der Erfindung sind in den Unteransprüchen beschrieben und unter Schutz gestellt.

Basis der Erfindung sind ein Haltegriff und eine schmale Bürstenleiste mit Bürsten kleiner oder gleich der Fugenbreite zur Aufnahme von Bürsten. Material sowie Festigkeit der Bürsten sind den zu bearbeitenden Fugen angepasst und dem Fachmann bekannt. In der Regel handelt es sich um eine Vielzahl sehr feiner, ziemlich steifer aber elastischer Kunststofffasern, die zu einem einzigen länglichen Bürstenstrang oder zu einer Vielzahl kleiner Bürstenbündel nebeneinander beziehungsweise hintereinander angeordnet sein können. Ein Beispiel für ein geeignetes Bürstenmaterial ist Polypropylen Copolymer mit einem Anteil von etwa 20 % Talkum. Dieses Material ist auch unter der Bezeichnung Karilen® bekannt. Der Bürstenkörper kann aus demselben Material bestehen wie die Borsten, selbstverständlich auch aus anderem Material als dem oben genannten Beispiel. Erfindungsgemäß ist die Breite der Bürsten der Fugenbreite angepasst. Die Erfindung ist somit zwar nicht auf eine bestimmte Bürstenbreite beschränkt, die Breite der Bürsten ergibt sich jedoch durch die beabsichtigte Anwendung und ist für den Fachmann unschwer ermittelbar.

Die Bürsten beziehungsweise Bürstenbündel können in entsprechenden Aushöhlungen an der unteren Befestigungsebene der Bürstenleiste befestigt werden, beispielsweise unter Pressdruck eingepasst und gegebenenfalls zusätzlich verklebt werden.

Die Bürstenleiste kann mit dem Haltegriff durch geeignete Befestigungsmittel wie eine entsprechend gestaltete H-förmige Schiene starr verbunden werden, der Bürstenstrang beziehungsweise die Bürstenbündel können in diese H-Schiene über entsprechendes Kunststoffmaterial eingegossen werden.

Es kann eine einzige lange Bürstenleiste an der Unterkante der Vorrichtung vorgesehen werden, oder zusätzlich eine kürzere vertikale Bürstenleiste an einer daran angrenzenden kurzen im Wesentlichen senkrechten Seitenkante der Vorrichtung. Zwischen unterer und vertikaler Bürstenleiste kann ferner in einem Winkel von etwa 45° hierzu eine Verbindungs-Bürstenleiste angeordnet, die bevorzugte aus einem einzigen Bürstenbündel besteht. Die kürzere, als vertikal bezeichnete Bürstenleiste muss nicht notwendig in einem Winkel von 90° zu der unteren langen Bürstenleiste stehen, sondern kann mit dieser auch einen Winkel einschließen, der in der Nähe von 90° liegt, beispielsweise im Bereich von 70 bis 110°. Auch die Verbindungs-Bürstenleiste muss nicht in einem Winkel von 45° zur unteren langen Bürstenleiste stehen, sondern kann auch in einem Winkel zwischen etwa 30 und 60° relativ zur unteren langen Bürstenleiste angeordnet sein.

Bevorzugt wird ein Ausführungsbeispiel, bei dem Halterung und Bürstenleiste in einem Bürstenkörper einstückig ausgebildet sind, wobei die der Fuge zugewandte untere Schmalseite der Reinigungsvorrichtung Reinigungsbürsten beziehungsweise eine Reihe von Reinigungs-Bürstenbündel aufweist, und vorzugsweise an einer angrenzenden Seitenkante der Vorrichtung eine zusätzliche vertikale Reihe von Bürstenbündeln vorgesehen ist, zwischen denen ein Verbindungs-Bürstenbündel angeordnet ist. Ein bequemer, an die Hand angepasster Haltegriff mit länglicher Halteöse ist als Verlängerung der Bürstenleiste nach außen weg von der zu reinigenden Fuge ausgebildet.

Bevorzugt werden Bürstenbündel mit einem Durchmesser von etwa 4 bis 6 mm, die aus einer Vielzahl sehr feiner und relativ steifer Kunststofffasern bestehen, die bevorzugte Länge der Bürstenbündel liegt bei 2 bis 10 mm, insbesondere zwischen 4 und 6 mm, zwischen den einzelnen Bürstenbündeln ist bevorzugt ein Zwischenraum von 1 bis 6 mm, bevorzugt 2 bis 4 mm, vorgesehen.

Vorzugsweise werden die Fugen vor der Bearbeitung durch die Vorrichtung erst für eine gewisse Zeit mit entsprechenden chemischen Substanzen in Form von Flüssigkeiten oder Pasten bearbeitet, wie beispielsweise eine chlorierte chemische Verbindung. Saure und alkalische Reinigungsmittel können verwendet werden.

Nach einem bevorzugten Ausführungsbeispiel ist die Bürstenleiste einstückig mit dem Haltegriff der Vorrichtung in einem Bürstenkörper ausgebildet. Die Dicke des Haltegriffs wird in der Regel größer sein als die Breite der Bürstenleiste, so dass der Haltegriff bequem in der Hand liegt und trotzdem die Bürstenbreite nicht vergrößert wird.

Der Winkel zwischen der unterer Befestigungskante für die Bürsten an der Bürstenleiste und wenigstens einer daran angrenzenden senkrechten hinteren Seitenkante des Bürstenkörpers sollte etwas geringer als 90°, vorzugsweise 88 bis 94° sein. Auf diese Weise kann die Bürste voll bis an die Wand reinigen, beispielsweise bei senkrecht aufeinander treffenden Fliesen.

In dem Haltegriff kann ein Loch zur Aufnahme eines Stiels vorgesehen sein, um auch in aufrechter Haltung mit der Fugenbürste arbeiten zu können.

In der Zeichnung sind Ausführungsbeispiele der Erfindung dargestellt,
Es zeigt:
Fig. 1 ein erstes Ausführungsbeispiel der Erfindung von der Seite, mit einer unteren Bürstenleiste, einer seitlichen, im Wesentlichen senkrechter Bürstenleiste und einer dazwischen angeordneten Verbindungs-Bürstenleiste
Fig. 2 die in Fig. 1 dargestellte Vorrichtung von hinten,
Fig. 3 ein anderes Ausführungsbeispiel einer Vorrichtung von hinten mit einstückig ausgebildeter Bürsteleiste,
Fig. 4 ein weiteres Ausführungsbeispiel der Erfindung von hinten mit sich nach oben verbreiterndem Haltegriff,
Fig. 5 die in Fig. 4 dargestellte Vorrichtung von oben,
Fig. 6 die in Fig. 4 und Fig. 5 dargestellte Vorrichtung in perspektivischer Darstellung von der Seite,
Fig. 7 ein weiteres Ausführungsbeispiel der Erfindung in perspektivischer Darstellung von vorne mit sich nach oben verbreiterndem Haltegriff, wobei die Bürsten in dieser Darstellung weggelassen wurden und noch ergänzt werden müssen
Fig. 8 die in Fig. 7 dargestellte Vorrichtung von der Seite.

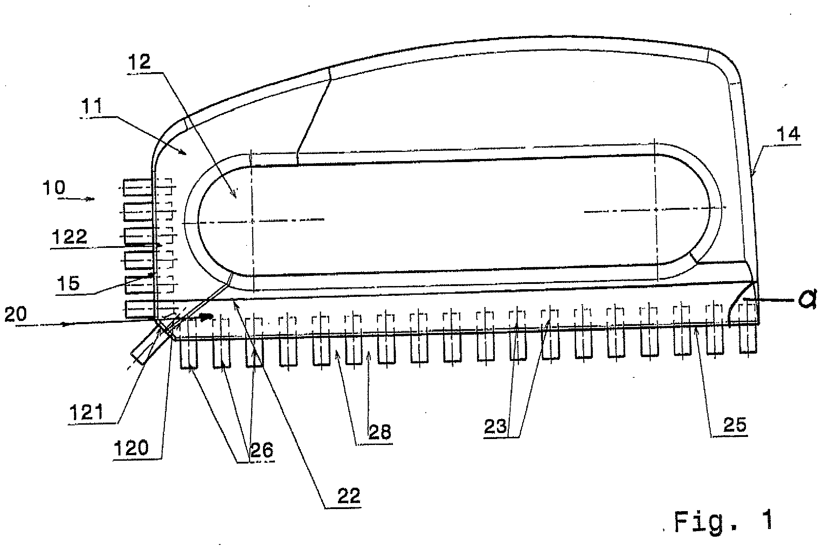

In Fig. 1 ist der obere Haltegriff der erfindungsgemäßen Vorrichtung allgemeinen mit 10 bezeichnet, die damit verbundene Bürstenleiste ist mit 20, die längliche Grifföse ist mit 12 bezeichnet. Durch diese Bestandteile wird ein einheitlicher Bürstenkörper gebildet.

An der Unterkante 25 der Bürstenleiste 20 sind eine Anzahl runder Bürstenbündel 26 hintereinander beziehungsweise nebeneinander angeordnet, die an entsprechenden Befestigungsösen 23 befestigt sind. Der Winkel a zwischen unterer Befestigungsebene der Unterkante 25 und den schmalen, nach oben sich erstreckenden Vorderkanten 14 und Hinterkanten 15 des Bürstenkörpers ist vorzugsweise kleiner als 90°, vorzugsweise 84 bis 88°, um beim Reinigen bis in die Ecken der Fugen zu gelangen, beispielsweise bei zwei in einem Winkel von 90° aufeinander treffenden Fliesenwänden. Die Zwischenräume zwischen den einzelnen Bürstenbündeln 26 sind mit 28 bezeichnet. Eine Halteleiste, welche die Befestigungsösen 23 enthält, ist mit 22 bezeichnet. Statt der Verwendung von Befestigungsösen können die Bürstenbündel 26 in dem in Fig. 1 dargestellten Beispiel auch direkt in eine Kunststoffmasse innerhalb der Halteleiste 22 eingegossen werden.

Senkrecht zur unteren Bürstenleiste 20 ist eine vertikale kurze Bürstenleiste 122 angeordnet, die ebenfalls einzelne Bürstenbündeln 26 umfasst.

Zwischen beiden Bürstenleisten 20, 122 ist eine Verbindungs-Bürstenleiste 121 angeordnet die im dargestellten Beispiel aus einem einzigen Bürstenbündel besteht und im Wesentlichen in einem 45°-Winkel zu der langen unteren Bürstenleiste 20 und der kürzeren vertikalen Bürstenleiste 122 angeordnet ist.

Auf diese Weise ist eine verbesserte Reinigung insbesondere im Bereich zwischen horizontal und vertikal angerichteten Fliesen möglich.

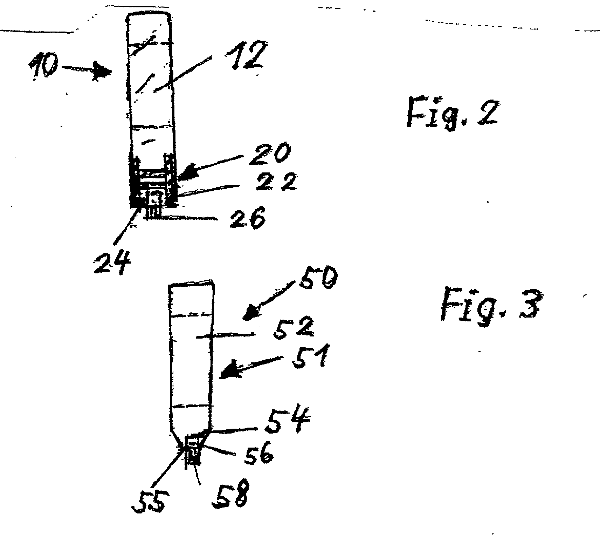

Fig. 2 zeigt die Darstellung von Fig. 1 von hinten im Schnitt, wobei die Einzelheiten der unteren langen Bürstenleiste 20 sowie eines Bürstenbündels 26 dargestellt sind. Die nicht dargestellte vertikale Bürstenleiste kann in gleicher Weise ausgebildet sein, oder auch aus in die Vorrichtung unmittelbar integrierten einzelnen Bürstenbündeln bestehen.

Als Material für die Bürsten kann im Handel ohne weiteres erhältliches steifes, aber elastisches Kunststoffmaterial eingesetzt werden, wie es für sonstige Reinigungsbürsten, beispielsweise auch für den Haushalt, bekannt ist. Ein Beispiel für ein geeignetes Material für den Grundkörper ist Polypropylen Copolymer mit einem Anteil von etwa 20 % Talkum. Dieses Material ist auch unter der Bezeichnung Karilen® bekannt. Der Bürstenkörper kann aus demselben Material bestehen wie die Borsten, selbstverständlich auch aus anderem Material als dem oben genannten Beispiel. Als Material für die Borsten kann beispielsweise Polyamid 66 verwendet werden, welches unter der Bezeichnung Stylon 66 kommerziell erhältlich ist.

Fig. 3 zeigt ein anderes Ausführungsbeispiel der Erfindung, nämlich eine Vorrichtung mit einstückig mit der Bürstenleiste ausgebildetem Haltegriff 51, der im unteren Bereich 54 zur unteren Befestigungskante beziehungsweise Befestigungsebene 55 hin verschmälert ist, an welcher die Bürstenbündel 58 über an der Unterkante 55 vorgesehene Halteösen 56 befestigt sind.

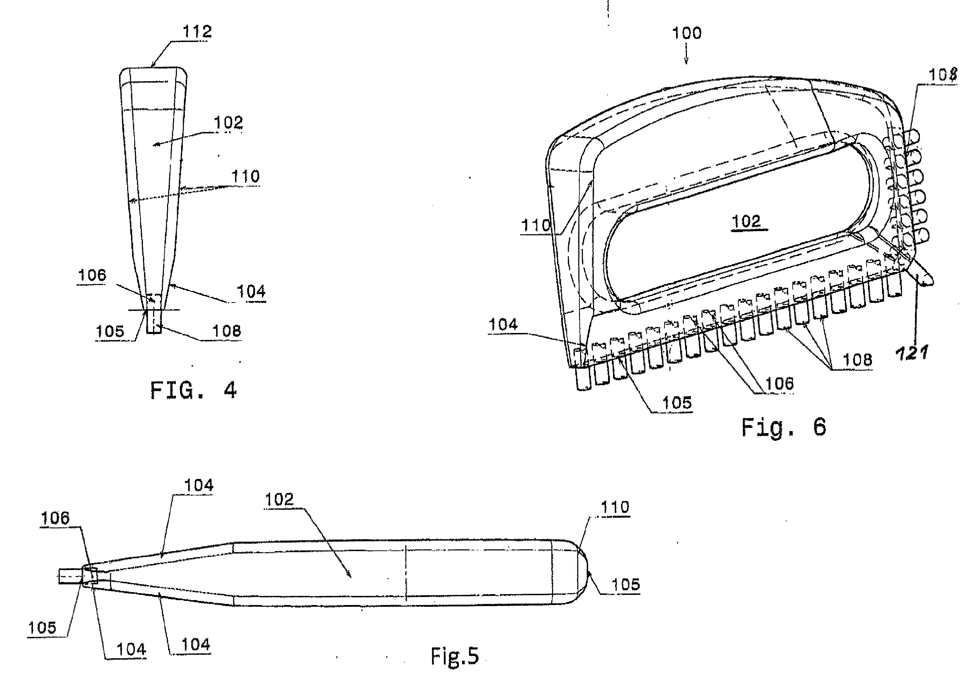

Die Fig. 4, Fig. 5 und Fig. 6 zeigen ein bevorzugtes Ausführungsbeispiel der Erfindung. Die allgemeine mit 100 bezeichnete Vorrichtung erstreckt sich von der unteren schmalen Befestigungsebene 105 für die einzelnen Bürstenbündel 108, welche in entsprechenden Befestigungsösen 106 befestigt sind, sich verbreiternd nach oben.

In Fig. 4 ist zunächst ein steiler Verbreiterungsbereich 104 sichtbar, der in einer geringeren Verbreiterung 110 bis zur oberen Kante 112 führt. Die Unterkante 105 zur Aufnahme der Befestigungsösen 106 für die Bürstenbündel 108 ist etwa 4 bis 6 mm breit, die Oberkante 112 etwa 12 bis 20 mm breit, so dass ein besonders bequemer Griff entsprechend den Abmessungen der Hand ermöglicht wird. Die Grifföse ist mit 102 bezeichnet.

Fig. 5 zeigt die Vorrichtung von Fig. 4 von oben, wobei gleiche Teile mit gleichen Bezugszeichen versehen sind. Der breitere Kantenbereich 110 und der schmale gegenüberliegende Kantenbereich 104 , welcher die gleiche Breite wie die Bürstenebene 105 aufweist, sind dabei wegen des geringfügig kleineren Winkels a, wie in Fig. 1 zu sehen, sichtbar. Die zusätzlichen Bürstenbündel an einer schmalen Kante der Vorrichtung sind in Fig. 4 und Fig. 5 nicht dargestellt.

Fig. 6 zeigt eine perspektivische Darstellung der in Fig. 4 und Fig. 5 gezeigten Vorrichtung von vorne und von der Seite, wobei gleiche Teile mit gleichen Bezugszeichen versehen sind. Sie gibt einen besseren Überblick über die erfindungsgemäße Vorrichtung einschließlich der Verbreiterung der einen verbreiterten Kante 110 nach oben, während die gegenüberliegende schmale Kante 104 die gleiche Breite wie die untere Bürstenkante 105 beibehält. Dies und die Art der Grifföse dienen zur Erzielung eines besonderes bequemen Griffes sowie der Anpassung an unterschiedliche Handgrößen und unterschiedliche Einsatzbedingungen.

Die einzelnen Bürstenbündel sind hierbei mit 108 bezeichnet, die sich in das Innere der Vorrichtungen erstreckenden Bohrungen mit 106, die unter Kante der Vorrichtung ist mit 105 bezeichnet. Weiterhin sind die kurze vertikale Befestigungsleiste mit Bürstenbündeln 108 sowie die Verbindungs-Bürstenleiste 121 dargestellt.

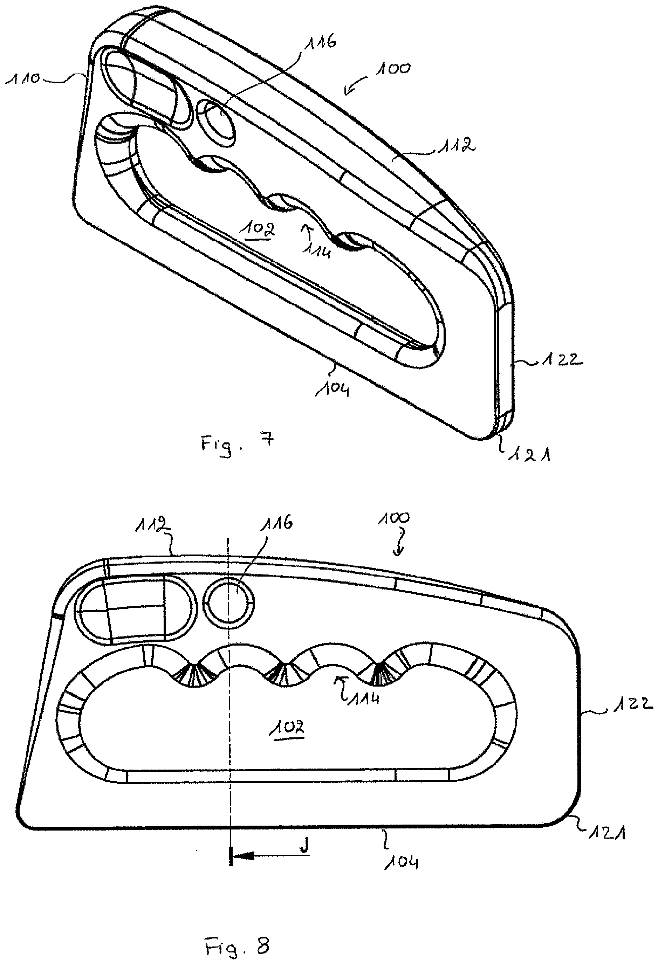

Die Ausführung der Fig. 7 und 8 unterscheidet sich von der Ausführung der Fig. 6 durch die Gestaltung des Haltegriffs 100, der im Bereich der Grifföse 102 mit Griffmulden 114 versehen ist, um die erfindungsgemäße Vorrichtung noch besser greifen und handhaben zu können. Erfindungsgemäß sind entlang der unteren Längskante 104 Bürstenbündel vorgesehen, die in den Fig. 7 und 8 jedoch nicht dargestellt sind. Diese können in Form einzelner Bündel, wie in Fig. 6 dargestellt, oder in Form einer durchgehenden Bürste gestaltet und auf dieselbe Weise mit dem Griffkörper verbunden sein, wie oben beschrieben. Ebenso können auch bei der Ausgestaltung der Fig. 7 und 8 entlang der vertikalen Seitenkante eine Bürstenleiste 122 sowie eine Verbindungs-Bürstenleiste 121 vorgesehen sein. Insofern wird auf die obige Beschreibung der Fig. 6 hingewiesen. Gleiches gilt für die Formgebung des Griffs 100, der zur oberen Kante 112 hin verbreitert sein kann, um eine besonders angenehme Handhabung sowie eine Anpassung an unterschiedliche Handgrößen zu ermöglichen.

In der in Fig. 7 und 8 gezeigten Ausführung ist ferner in dem Griff 100 ein Loch 116 vorgesehen, in das ein Stiel (nicht gezeigt) eingesetzt werden kann, um mit der Vorrichtung auch in aufrechter Haltung bequem arbeiten zu können. Das Loch kann auch anders als in den Figuren gezeigt ausgerichtet sein, um unterschiedliche Einfügepositionen für den Stiel zu ermöglichen.

Die vorstehende Zeichnung soll eine Erläuterung und unter Umständen auch eine Ergänzung der Ansprüche an Hand der Zeichnung darstellen.

## Patentansprüche

1. Fugen-Reinigungsvorrichtung, die einen Haltegriff (11; 51; 101) und wenigstens eine schmale Bürstenleiste (20) mit Bürsten aufweist, wobei die Breite der Bürsten senkrecht zur Längsrichtung der Bürstenleiste kleiner oder gleich der Breite der zu bearbeitenden Fugen ist, und die Bürstenleiste eine lange untere Bürstenleiste an einer unteren Längskante der Vorrichtung und eine kürzere vertikale Bürstenleiste an einer zu dieser im wesentlichen senkrechten Seitenkante und eine zusätzlich in einem Winkel von etwa 45° zu der unteren und der vertikalen Bürstenleiste angeordnete Verbindungs-Bürstenleiste umfasst.

2. Vorrichtung nach Anspruch 1, **gekennzeichnet durch** eine mit dem Haltegriff (11) verbundene Halteleiste (22) mit Befestigungsösen (23) für eine einzige längliche Bürste oder für eine Vielzahl nebeneinander liegender einzelner Bürstenbündel (26).

3. Vorrichtung nach Anspruch 2, **dadurch gekennzeichnet, dass** die Halteleiste (22) einstückig mit dem Haltegriff (51; 101) ausgebildet ist.

4. Vorrichtung nach einem der Ansprüche 1 bis 3, **dadurch gekennzeichnet, dass** der Haltegriff eine schmale Seitenkante (14) aufweist und diese Seitenkante (14) mit der Bürstenleiste (20) einen Winkel einschließt, der geringfügig kleiner als 90° ist, vorzugsweise 84° bis 88.

5. Vorrichtung nach einem der Ansprüche 1 bis 4, **dadurch gekennzeichnet, dass** der Haltegriff als Verlängerung der Bürstenleiste und als längliche Grifföse im Wesentlichen parallel zur Bürstenebene (25:105) der Bürstenleiste ausgebildet ist.

6. Vorrichtung nach einem der Ansprüche 1 bis 5, **dadurch gekennzeichnet, dass** der Haltegriff (101) von der Bürstenebene (105) der Bürstenleiste zur oberen Kante beidseits der Bürstenleiste verbreitert ist, vorzugsweise auf 16 bis 24 mm, oder nur an einer der beiden seitlichen Kanten (110) verbreitert ist, und dass die Kantenhöhe an gegenüber liegenden Abschnitten des Haltegriffes unterschiedlich hoch sein kann.

7. Vorrichtung nach einem der Ansprüche 1 bis 6, **dadurch gekennzeichnet, dass** die Bürstenleiste mit einer durchgehenden Bürste bestückt ist, vorzugsweise in einer Breite von 4 bis 6 mm.

8. Vorrichtung nach einem der Ansprüche 1 bis 6, **dadurch gekennzeichnet, dass** Bürstenleiste mit einzelnen Bürstenbündel (26; 108) bestückt ist, vorzugsweise mit einem Durchmesser zwischen 4 und 6 mm, die hintereinander in einer Reihe an der Bürstenleiste angeordnet sind, wobei dazwischen Leerräume (28) angeordnet sind, vorzugsweise zwischen 1 und 6 mm, noch mehr bevorzugt zwischen 2 und 4 mm.

9. Vorrichtung nach einem der Ansprüche 1 bis 8, **dadurch gekennzeichnet, dass** die Bürstenhöhe abhängig von Art und Material der Fugen und dem Bürstenmaterial gewählt wird, vorzugsweise zwischen 2 bis 10 mm, noch mehr bevorzugt zwischen 4 und 6 mm.

10. Vorrichtung noch einem der Ansprüche 1 bis 9, **dadurch gekennzeichnet, dass** als Material für Bürsten übliches elastisches Kunststoffmaterial von hoher Steifigkeit eingesetzt ist, wobei eine Vielzahl dünner Einzelfasern zu einem Bündel zusammen gepresst und in Halteösen gedrückt sind.

11. Vorrichtung nach einem der Ansprüche 1 bis 10, **dadurch gekennzeichnet, dass** die Bürsten aus Kunststoff hergestellt sind

## Claims

1. A joint cleaning device which has a handle (11; 51; 101) and at least one narrow brush strip (20) with brushes, wherein the width of the brushes perpendicular to the longitudinal direction of the brush strip is less than or equal to the width of the joints to be worked on, and the brush strip comprises a long lower brush strip on a lower longitudinal edge of the device and a shorter vertical brush strip on a side edge substantially perpendicular to this and a connecting brush strip additionally arranged at an angle of approximately 45° to the lower and the vertical brush strip.

2. The device according to claim 1, **characterized by** a retaining strip (22) connected to the handle (11) with fastening eyelets (23) for a single elongate brush or for a plurality of individual adjoining brush bundles (26).

3. The device according to claim 2, **characterized in that** the retaining strip (22) is configured integrally with the handle (51; 101).

4. The device according to one of claims 1 to 3, **characterized in that** the handle has a narrow side edge (14) and this side edge (14) encloses with the brush strip (20) an angle which is slightly smaller than 90°, preferably 84° to 88°.

5. The device according to one of claims 1 to 4, **characterized in that** the handle is configured as an extension of the brush strip and as an elongate grip eyelet substantially parallel to the brush plane (25; 105) of the brush strip.

6. The device according to one of claims 1 to 5, **characterized in that** the handle (101) is widened from the brush plane (105) of the brush strip to the upper edge on both sides of the brush strip, preferably to 16 to 24 mm, or is widened only on one of the two lateral edges (110), and that the edge height can be at different heights at opposite sections of the handle.

7. The device according to one of claims 1 to 6, **characterized in that** the brush strip is fitted with a continuous brush, preferably in a width of 4 to 6 mm.

8. The device according to one of claims 1 to 6, **characterized in that** the brush strip is fitted with individual brush bundles (26; 108), preferably with a diameter between 4 and 6 mm, which are arranged one behind the other in a row on the brush strip, wherein empty spaces (28) are arranged between them, preferably between 1 and 6 mm, more preferably between 2 and 4 mm.

9. The device according to one of claims 1 to 8, **characterized in that** the brush height is selected depending on the type and material of the joints and the brush material, preferably between 2 to 10 mm, more preferably between 4 and 6 mm.

10. The device according to one of claims 1 to 9, **characterized in that** common elastic plastic material of high rigidity is used as material for brushes, wherein a plurality of thin individual fibers are pressed together into a bundle and pressed into holding eyelets.

11. The device according to one of claims 1 to 10, **characterized in that** the brushes are made of plastic.

## Revendications

1. Dispositif de nettoyage de joints, comportant une poignée (11; 51; 101) et au moins un joint balai (20) doté de balais, la largeur des balais à la perpendiculaire de la direction longitudinale du joint balai étant inférieure ou égale à la largeur des joints qui doivent être traités et le joint balai comprenant un joint balai inférieur long sur une arête longitudinale inférieure du dispositif et un joint balai vertical plus court sur une arête latérale sensiblement perpendiculaire par rapport à celle-ci et un joint balai d'assemblage, placé sous un angle d'environ 45° par rapport aux joints balais inférieur et vertical.

2. Dispositif selon la revendication 1, **caractérisé par** une baguette de maintien (22) assemblée avec la poignée (11) avec des oeillets de fixation (23) pour un unique balai allongé ou pour une pluralité de faisceaux de balais (26) individuels, situés côte à côte.

3. Dispositif selon la revendication 2, **caractérisé en ce que** la baguette de maintien (22) est conçue en monobloc avec la poignée (51 ; 101).

4. Dispositif selon l'une quelconque des revendications 1 à 3, **caractérisé en ce que** la poignée comporte une arête latérale (14) et **en ce que** ladite arête latérale (14) forme avec le joint balai (20) un angle qui est légèrement inférieur à 90°, de préférence de 84° à 88°.

5. Dispositif selon l'une quelconque des revendications 1 à 4, **caractérisé en ce que** la poignée est conçue sous la forme d'un prolongement du joint balai et sous la forme d'un oeillet de préhension allongé, sensiblement parallèle au plan des balais (25 ; 105) du joint balai.

6. Dispositif selon l'une quelconque des revendications 1 à 5, **caractérisé en ce que** la poignée (101) est élargie, du plan des balais (105) du joint balai vers l'arête supérieure, de part et d'autre du joint balai, de préférence à de 16 à 24 mm, ou n'est élargie que sur l'une des deux arêtes (110) latérales et **en ce que** la hauteur des arêtes sur des portions en vis-à-vis de la poignée peut être de hauteur différente.

7. Dispositif selon l'une quelconque des revendications 1 à 6, **caractérisé en ce que** le joint balai est équipé d'un balai continu, de préférence sur une largeur de 4 à 6 mm.

8. Dispositif selon l'une quelconque des revendications 1 à 6, **caractérisé en ce que** le joint balai est équipé de faisceaux de balais (26 ; 108) individuels, de préférence d'un diamètre compris entre 4 et 6 mm, qui sont placés l'un derrière l'autre, sur une rangée sur le joint balai, entre ces derniers étant placés des espaces libres (28), de préférence compris entre 1 et 6 mm, de manière encore plus préférentielle, compris entre 2 et 4 mm.

9. Dispositif selon l'une quelconque des revendications 1 à 8, **caractérisé en ce que** la hauteur des balais est choisie en fonction de la nature et de la matière des joints et de la matière des balais, de préférence entre 2 et 10 mm, de manière encore plus préférentielle, entre 4 et 6 mm.

10. Dispositif selon l'une quelconque des revendications 1 à 9, **caractérisé en ce qu'**en tant que matière pour les balais, on utilise un matière plastique élastique habituelle de rigidité élevée, sachant qu'une pluralité de fibres individuelles sont pressées ensemble en un faisceau et poussées dans des oeillets de maintien.

11. Dispositif selon l'une quelconque des revendications 1 à 10, **caractérisé en ce que** les balais sont fabriqués en matière plastique.
